# NEUE EUROPÄISCHE PATENTSCHRIFT

(11) **EP 1 446 786 B2**
(45) Veröffentlichungstag und Bekanntmachung des Hinweises auf die Entscheidung über den Einspruch: **24.08.2011**
(45) Hinweis auf die Patenterteilung: 14.02.2007
(21) Anmeldenummer: 02772049.9
(22) Anmeldetag: 06.09.2002
(51) Int. Cl.: G08G 1/0969, G01C 21/32

(54) **VERFAHREN ZUR NAVIGATION EINES FAHRZEUGS**
METHOD FOR NAVIGATION OF A VEHICLE
PROCEDE DE NAVIGATION D'UN VEHICULE

(30) Priorität: 13.11.2001 DE 10155514
(43) Veröffentlichungstag der Anmeldung: 18.08.2004
(73) Patentinhaber: ROBERT BOSCH GMBH, 70442 Stuttgart (DE)
(72) Erfinder: BARKOWSKI, Andre, 38228 Salzgitter (DE)
(86) Internationale Anmeldenummer: PCT/DE2002/003316
(87) Internationale Veröffentlichungsnummer: WO 2003/042951

(56) Entgegenhaltungen:
- EP-A- 1 098 172
- EP-A- 1 103 788
- PATENT ABSTRACTS OF JAPAN vol. 2000, no. 25, 12. April 2001 (2001-04-12) & JP 2001 229369 A (SUMITOMO ELECTRIC IND LTD), 24. August 2001 (2001-08-24)
- PATENT ABSTRACTS OF JAPAN vol. 1999, no. 01, 29. Januar 1999 (1999-01-29) & JP 10 281777 A (NEC HOME ELECTRON LTD), 23. Oktober 1998 (1998-10-23)
- PATENT ABSTRACTS OF JAPAN vol. 1999, no. 12, 29. Oktober 1999 (1999-10-29) & JP 11 174953 A (SUMITOMO ELECTRIC IND LTD), 2. Juli 1999 (1999-07-02)
- PATENT ABSTRACTS OF JAPAN vol. 2000, no. 12, 3. Januar 2001 (2001-01-03) & JP 2000 251396 A (TOYOTA MOTOR CORP), 14. September 2000 (2000-09-14)

## Beschreibung

### Stand der Technik

Die Erfindung geht aus von einem Verfahren zur Navigation eines Fahrzeugs in einem Straßennetz nach der Gattung des Hauptanspruchs. Es sind schon Navigationsgeräte bekannt, die für den Betrieb einen Datenträger, z.B. eine Compact Disc oder eine DVD (Digital Versatile Disc) benötigen. Auf dem Datenträger ist eine digitale Karte mit einem Straßennetz aufgebracht, wobei für die Berechnung der Fahrtroute und für die Ausgabe von Fahranweisungen regelmäßig von der Navigationsvorrichtung auf den Datenträger zugegriffen wird. Das aufwendige Datenträgerlaufwerk steht damit im Fahrzeug nur für die Navigationsvorrichtung zur Verfügung bzw. kann während der Durchführung der Fahrzeugnavigation nicht für andere Datenträger verwendet werden. Ferner sind auch Navigationsverfahren bekannt, bei denen von einer Navigationsvorrichtung im Fahrzeug über eine Luftschnittstelle auf eine externe Datenbank zugegriffen wird, ohne dass im Fahrzeug ein Datenträger benötigt wird. Hierbei entstehen jedoch für die Datenübertragung zusätzliche Kosten.

Die EP 1 098 172 A2 zeigt ein Navigationssystem mit einer Lesevorrichtung für Straßenkartendaten, und einen nicht flüchtigen Speicher, um die Kartendaten zu speichern. Hierbei werden der Fahrtroute entsprechende Blöcke von Kartendaten gespeichert. Die DVD kann anschließend entnommen werden, so dass eine andere DVD mit Musikdaten eingelegt werden kann.

Die DE 199 47 790 A1 beschreibt ein Navigationsystem, ein Gerät zur Aufnahme von mehreren Datenträgern verwendet, das zur Auswahl eines Datenträgers mit Landkartendaten abhängig von einer Fahrzeugposition benutzt wird.

Die EP 0 782 119 A2 zeigt ein Navigationssystem, welches aus einer Mehrzahl von Datenträgern automatisch einen Datenträger auswählt, der Navigations daten entsprechend einer position eines Fahrzeugs enthält.

### Vorteile der Erfindung

Das erfindungsgemäße Verfahren zur Navigation eines Fahrzeugs in einem Straßennetz mit den Merkmalen des Hauptanspruchs hat demgegenüber den Vorteil, dass unmittelbar nach dem Einlegen des Datenträgers in ein Datenträgerlaufwerk Navigationsdaten automatisch in einen Speicher der Navigationsvorrichtung übertragen werden. Für die Fahrzeugnavigation, also insbesondere für die Fahrtroutenberechnung, die Ausgabe von Fahranweisungen, aber auch für die Ausgabe von zusätzlichen Informationen stehen die übertragenen Daten nun der Navigationsvorrichtung zur Verfügung, ohne dass ein erneuter Zugriff auf den Datenträger erfolgen muss. Hierdurch kann das Datenträgerlaufwerk auch für andere Zwecke, z.B. für die Wiedergabe von Musik- oder von Videodaten verwendet werden. Zudem steht in einem begrenzten Gebiet, sofern es die Speicherkapazität des Speichers der Navigationsvorrichtung zulässt, eine Navigation auch ohne Einlegen eines Datenträgers zur Verfügung. Durch den unmittelbaren Zugriff auf den der Navigationsvorrichtung zugeordneten Speicher wird zudem die Zugriffszeit auf die Navigationsdaten verkürzt.

Nach der Erfindung kann der eingelegte Datenträger nach dem Übertragen der Navigationsdaten entnommen und ein anderer Datenträger eingesetzt werden kann, ohne dass eine Navigationsfunktion unterbrochen werden muss. Hierdurch können insbesondere die Daten von verschiedenen Datenträgern in der Navigationsvorrichtung verknüpft werden, z.B. die Datenträger von verschiedenen Herstellern bzw. Datenträger mit verschiedenem Inhalt, z.B. ein erster Datenträger mit Kartendaten mit einem zweiten Datenträger mit touristischen Informationen, die dann von der Navigationsvorrichtung gemeinsam ausgewertet werden können.

Weiterhin ist Teil der Erfindung, dass auf einem ersten Datenträger ein erstes Kartengebiet und auf einem zweiten Datenträger ein zweites Kartengebiet gespeichert ist, so dass eine Fahrtroute von dem ersten Kartengebiet in das zweite Kartengebiet geplant werden kann. Soll z.B. eine Fahrt grenzüberschreitend von Deutschland nach Frankreich erfolgen, kann zunächst die Deutschland-CD eingelegt werden, deren relevanten Daten in den Speicher übertragen werden. Anschließend wird eine CD mit französischen Kartendaten eingelegt, wobei die Routenführung auch durch Frankreich geplant wird. Ein anschließendes Wechseln der Datenträger ist nicht mehr erforderlich, da die relevanten Navigationsdaten ohne eine Benutzeraufforderung automatisch in den Speicher der Navigationsvorrichtung übertragen worden sind. Die gespeicherten Daten können ferner eine Zusammenstellung aus mehreren Quelldaten sein, z.B. ein Reiseführer als Mixtour aus verschiedenen Reiseführerdatenträgern oder Navigationsdaten als Zusammenstellung von mehreren Gebietsdatenträgern.

Durch die in den Unteransprüchen aufgeführten Maßnahmen sind vorteilhafte Weiterbildungen und Verbesserungen des im Hauptanspruch angegebenen Verfahrens möglich.

Weiterhin ist vorteilhaft, die von dem Datenträger übertragenen Daten in der Navigationsvorrichtung nichtflüchtig zu speichern, so dass auch nach einem Abschalten des Fahrzeugs bzw. nach einem Spannungsausfall die Daten für eine weitere Fahrzeugnavigation zur Verfügung stehen.

Weiterhin ist vorteilhaft, die Daten in Abhängigkeit von einer gewählten Funktion, von der geplanten Route oder der aktuellen Fahrzeugposition zu speichern. Hierdurch wird erreicht, dass insbesondere die Daten von dem Datenträger auf die Navigationsvorrichtung übertragen werden, auf die ein Zugriff besonders-wahrscheinlich wird.

Hierbei ist insbesondere vorteilhaft, die Daten in der Umgebung einer Fahrtroute zu speichern, so dass bei einem Befahren der Fahrtroute für einen Korridor vorgegebener Breite kein erneuter Zugriff auf den Datenträger erforderlich ist.

Ferner ist vorteilhaft, die Navigationsdaten bei der Übertragung in ein anderes Datenformat umzuwandeln. Insbesondere für den Fall, dass die Daten auf dem Datenträger codiert gespeichert sind, können damit direkt unkodierte Daten in dem der Navigationsvorrichtung zugewiesenen Speicher abgelegt werden. Ferner ist es auf diese Weise auch möglich, Datenträger verschiedener Hersteller bei einer Übertragung der Daten auf den Speicher der Navigationsvorrichtung direkt in ein für die Navigationsvorrichtung kompatibles Datenformat umzuwandeln, so dass bei einem_Zugriff auf die entsprechenden Daten für die Umwandlung in das Datenformat kein weiterer Zeitbedarf erforderlich ist.

### Zeichnung

Ausführungsbeispiele der Erfindung sind in der Zeichnung dargestellt und in der nachfolgenden Beschreibung nähererläutert.

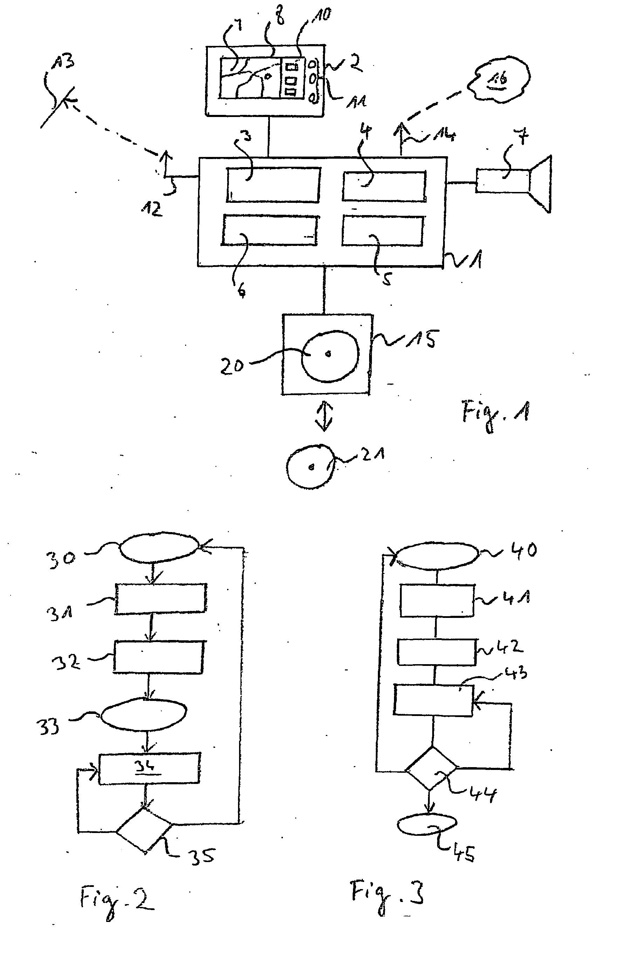

In der Figur 1 ist eine erfindungsgemäße Navigationsvorrichtung zur Durchführung des erfindungsgemäßen Verfahrens dargestellt. Die Figuren 2 und 3 zeigen zwei Ausführungsbeispiele für die Durchführung des erfindungsgemäßen Verfahrens.

### Beschreibung des Ausführungsbeispiels

In der Figur 1 ist eine Navigationsvorrichtung 1 dargestellt, die mit einer Anzeigeeinheit 2 verbunden ist. Die Navigationsvorrichtung 1 weist eine Recheneinheit 3, einen Arbeitsspeicher 4, einen Speicher 5 für Navigationsdaten und eine Wiedergabevorrichtung 6 für Audio- und/oder Videodaten auf. An die Navigationsvorrichtung 1 ist ferner ein Lautsprecher 7 angeschlossen, vorzugsweise der Lautsprecher des Autoradios. Die Anzeigeeinheit 2 weist eine Anzeigefläche 8 auf, die vorzugsweise als eine Flüssigkristallanzeige ausgeführt ist. In der Anzeigefläche 8 wird eine Kartendarstellung 9 mit einer Straßendarstellung angezeigt. Ferner wird in der Anzeigefläche 8 ein Bedienmenü 10 angezeigt, das mit neben der Anzeigefläche 8 angeordneten Bedienelementen 11 zusammenwirkt und der Steuerung der Navigationsvorrichtung 1 dient. Über eine Ortungsvorrichtung 12, die vorzugsweise als eine Satellitenortungsvorrichtung des GPS (GPS = Global Positioning System) ausgeführt ist, kann mittels Kontakt zu einem Satelliten 13 eine Position des Fahrzeugs bestimmt werden, in dem die Navigationsvorrichtung 1 angeordnet ist. Über eine Funkschnittstelle 14 können weitere Daten von einem Mobilfunknetz 16 abgerufen werden. Insbesondere ist eine Verbindung zum Internet möglich. An die Navigationsvorrichtung 1 ist ferner ein Datenträgerlaufwerk 15 angeschlossen, in das ein Datenträger 20 einlegbar ist. Der Datenträger 20 kann auf Benutzerwunsch ausgegeben werden und durch einen zweiten Datenträger 21 ersetzt werden. In einem weiteren Ausführungsbeispiel kann das Datenträgerlaufwerk auch in die Navigationsvorrichtung 1 integriert sein oder ein Datenträger, z.B. eine Speicherkarte, kann selbst unmittelbar über eine geeignte Schnittstelle mit der Navigationsvorrichtung 1 verbunden werden.

Die Datenträger 20, 21 sind vorzugsweise als magnetische und/oder optische Datenträger ausgeführt, z.B. als eine Compact Disc, als eine magnetooptische Disc oder als eine DVD (Digital Versatile Disc). Die Wiedergabevorrichtung 6 dient insbesondere als ein Audio- bzw. Videotuner, wobei ein Bildsignal über die Anzeigeeinheit 2 und ein Audiosignal über den Lautsprecher 7 ausgegeben wird. Der Arbeitsspeicher 4 ist als flüchtiger Speicher ausgeführt und der Recheneinheit 3 zugeordnet. Der Speicher 5 dient der Aufnahme der von dem Datenträger 20 an die Navigationsvorrichtung 1 übertragenen Navigationsdaten. In einem bevorzugten Ausführungsbeispiel ist der Speicher 5 als ein nichtflüchtiger Speicher, z.B. als ein über einen Akkumulator gepufferten flüchtigen Speicher z.B. ein RAM (Random Access Memory) als eine Festplatte, als eine Speicherkarte oder als ein wiederbeschreibbarer magnetischer und/oder optischer Datenträger ausgeführt. Bei dem Einlegen des Datenträgers 20 in das Datenträgerlaufwerk 15 wird von der Recheneinheit 3 eine automatische Übertragung von Navigationsdaten an den Speicher 5 ausgelöst. Die Navigationsdaten sind insbesondere Daten einer digitalen Straßenkarte. Weitere Navigationsdaten sind z.B. zusätzliche Informationen, z.B. Informationen über eine Straßenbelastung, über Hotels und Gaststätten, über touristische Sehenswürdigkeiten oder über Tankstellen sowie Rastgelegenheiten. Über die Luftschnittstelle 14 können zudem aktuelle Verkehrsinformationen abgefragt und bei der Fahrzeugnavigation berücksichtigt werden. Nach Eingabe des Benutzers über die Bedienelemente 12 berechnet die Navigationsvorrichtung 3 auf Basis der an den Speicher 5 übermittelten Navigationsdaten eine Fahrtroute von der über die Ortungsvorrichtung 12 ermittelten Fahrzeugposition zu einem über die Bedienelemente 11 eingegebenen Fahrziel. Hieraus bestimmt die Rechenvorrichtung 3 Fahranweisungen, die über den Lautsprecher und/oder die Anzeigeeinheit 2 an den Fahrer ausgegeben werden.

In einem ersten Ausführungsbeispiel des erfindungsgemäßen Verfahrens werden die Daten verschiedener Navigationsdatenträger eingelesen und für die Fahrzeugnavigation berücksichtigt. Wird von einem Benutzer z.B. eine Fahrt von einer Stadt nach Deutschland in eine französische Stadt gewünscht, und liegen die Straßenkarteninformationen nur auf zwei unterschiedlichen Datenträgern vor, so wird ein Benutzer zunächst zum Einlegen des ersten Datenträgers mit den deutschen Kartendaten aufgefordert. Ein Teil der Kartendaten wird entsprechend der aktuellen Fahrzeugposition in den Speicher 5 übertragen. Anschließend wird der Benutzer zum Einlegen des zweiten Datenträgers mit den französischen Kartendaten aufgefordert. Anhand der übertragenen Kartendaten wird die optimale Fahrtroute bestimmt. Entnimmt ein Benutzer der Datenträger zu früh aus dem Datenträgerlaufwerk 15, so wird eine Warnung hierzu über den Lautsprecher und/oder die Anzeige 2 ausgegeben.

In der Figur 2 ist ein weiteres Ausführungsbeispiel für ein erfindungsgemäßes Verfahren dargestellt. Ausgehend von einem Aufforderungsschritt 30 wird ein Benutzer zum Einlegen eines Navigationsdatenträgers in das Datenträgerlaufwerk 15 aufgefordert. Anschließend werden in einem Bestimmungsschritt 31 z.B. abhängig von der Fahrtroute bzw. von dem über die Bedienelemente 11 eingegebenen Fahrziel diejenigen Daten bestimmt, die an den Speicher 5 der Navigationsvorrichtung 1 übertragen werden. In einem anschießenden Übertragungsschritt 32 werden diese Daten von dem Datenträger 20 möglichst unmittelbar nach Einlegen des Datenträgers 20 gelesen, an die Navigationsvorrichtung 1 übertragen und in dem Speicher 5 abgelegt. Hier stehen Sie für eine Verarbeitung durch die Recheneinheit 3 zur Verfügung. Eine Aufforderung zur Datenübertragung durch 0einen Benutzer ist nicht erforderlich, da die Datenübertragung automatisch von der Navigationsvorrichtung 1 gestartet wird. Eine weitere, vom Benutzer gewünschte Übertragung kann z.B. über die Bedieneinheit 11 zusätzlich angefordert werden. Gegebenenfalls werden die Daten bei der Übertragung von der Rechenvorrichtung 3 dekodiert. In einem anschließenden Hinweisschritt 33 wird dem Benutzer der Hinweis ausgegeben, dass eine erforderliche Datenübertragung abgeschlossen ist und der Datenträger zunächst nicht weiter benötigt wird. Wünscht der Benutzer nun eine Musik- oder Videowiedergabe, so kann er einen weiteren Datenträger 21 in das Datenträgerlaufwerk 15 einlegen und eine Musikwiedergabe 34 wird gestartet. In einem anschließenden Überprüfungsschritt 35 wird regelmäßig nach vorgegebenen Zeitabständen überprüft, ob der Datenträger erneut benötigt wird. Bei einem Abfahren der zuvor berechneten Route wird dies nicht der Fall sein, da alle relevanten Daten hierfür in dem Speicher 5 gespeichert sind und damit der Recheneinheit 3 zur Verfügung stehen. Wird der Datenträger 20 nicht benötigt, so wird die Musikwiedergabe 34 weitergeführt. Wird dagegen festgestellt, dass der vorherige Datenträger erneut benötigt wird oder dass ein anderer Datenträger eingelegt werden muss, so wird zu dem Aufforderungsschritt 30 zurück verzweigt.

In der Figur 3 ist ein weiteres Ausführungsbeispiel für ein erfindungsgemäßes Verfahren dargestellt. Ausgehend von einem Routenberechnungsschritt 40 wird eine Fahrtroute von einem Startpunkt zu einem Fahrziel, gegebenenfalls mit erforderlichen Fahrhinweisen, berechnet. In einem anschließenden Bestimmungsschritt 41 werden die Navigationsdaten bestimmt, die von dem Datenträger 20 in den Speicher 5 übertragen werden. Hierbei wird insbesondere ein Korridor um die Fahrtroute herum ermittelt. Dieser Korridor kann z.B. in der Umgebung des Startpunktes und des Zieles schmal, dagegen in Richtung hin zu der Mitte der Fahrtroute jeweils verbreitert werden. Gegebenenfalls ist auch eine Zuordnung zu geographischen Sektoren möglich, die z.B. durch die Angabe von Grenzen in einem Koordinatensystem, z.B. den Längen und Breitengraden abgegrenzt sind. Gegebenenfalls können auch Fahrerpräferenzen, die vorzugsweise in der Navigationsvorrichtung 1 gespeichert sind oder durch diese vorgebbar sind, berücksichtigt werden. So können z.B. entweder insbesondere nur Nebenstraßen oder nur die Daten von Autobahnen übertragen werden. Diese Übertragung wird in dem nachfolgenden Übertragungsschritt 42 durchgeführt. In einem anschließenden Ausgabeschritt 43werden die einzelnen Fahranweisungen und gegebenenfalls touristische Zusatzinformationen über die Anzeigeeinheit 2 und/oder den Lautsprecher 7 optisch und/oder akustisch an den Benutzer ausgegeben. In einem anschließenden Positionüberprüfungsschritt 44 wird die aktuelle Fahrzeugposition überprüft. Wird festgestellt, dass das Fahrziel erreicht wurde, so wird die Fahrzeugnavigation in einem Endschritt 45 beendet. Wird festgestellt, dass sich das Fahrzeug noch innerhalb des zuvor festgelegten Korridors befindet, so wird zu dem Ausgabeschritt 43 zur Ausgabe der nächsten Fahranweisung zurück verzweigt. Wird in dem Positionsüberprüfungsschritt 44 festgestellt, dass der Korridor verlassen wurde, z.B. infolge einer Verkehrsstörung entweder auf den Wunsch des Benutzers oder einer erforderlichen Änderung der Fahrtroute in Folge einer über die Luftschnittstelle 14 übertragenen Verkehrsstörung, wird zu dem Routenberechnungsschritt 40 zurück verzweigt und es wird eine Anpassung der Fahrtroute vorgenommen. Während nach dem Übertragungsschritt 42 zunächst der Datenträger nicht mehr benötigt wird, muss er nun erneut für den Routenberechnungsschritt 40 eingelegt werden.

In der Anzeigefläche 8 kann zudem angezeigt werden, welche Zeit noch bis zum Abschluss der Übertragung der Daten in den Speicher 5 benötigt wird. Insbesondere kann der Hinweis zum Einlegen des Datenträgers auch über den Lautsprecher 7 akustisch ausgegeben werden. Ebenfalls wird eine Warnung ausgegeben, sollten die Daten noch nicht vollständig in den Speicher 5 übertragen worden sein.

## Patentansprüche

1. Verfahren zur Navigation eines Fahrzeugs in einem Straßennetz, wobei Navigationsdaten von einem Datenträger gelesen und in einer Navigationsvorrichtung verarbeitet wurden, wobei nach einem Einlegen des Datenträgers Navigationsdaten automatisch in einen Speicher der Navigationsvorrichtung übertragen werden, **dadurch gekennzeichnet, dass** mach der automatischen Übertragung ein erster Datenträger durch einen zweiten Datenträger ersetzt wird, dass nach einem Einlegen des zweiten Datenträgers Navigationsdaten von dem zweiten Datenträger automatisch in den Speicher der Navigationsvornchtung übertragen werden, dass die von dem ersten und dem zweiten Datenträger übertragenen Daten in dem Speicher der Navigationsvorrichtung weiterhin gespeichert werden, wobei auf dem ersten Datenträger ein erstes Kartengebiet und auf dem zweiten Datenträger ein zweites Kartengebiet gespeichert ist, und dass von der Navigationsvorrichtung eine Fahrtroute durch das erste und das zweite Kartengebiet anhand der in den Speicher überträgenen Kartendaten berechnet wird.

2. Verfahren nach Anspruch 1, **dadurch gekennzeichnet dass** der Datenträger- in ein mit der Navigaionsvorrichtung verbundenes Datenträgerlaufwerk eingelegt wird.

3. Verfahren nach einem der vorhergehenden Ansprüche, **dadurch gekennzeichnet, dass** die Daten in der Navigationsvorrichtung nichtflüchtig gespeichert werden.

4. Verfahren nach einem der vorhergehenden Ansprüche, **dadurch gekennzeichnet dass** die Daten In dem Speicher in Abhängigkeit von einer gewählten Funktion der Navigationsvorrichtung und/oder in Abhängigkeit von einem Benutzerprofil und/oder in Abhängigkeit von einer aktuellen Fahrzeugposition und/oder in Abhängigkeit von einer berechneten Fahrtroute gespeichert werden.

5. Verfahren nach Anspruch 4, **dadurch gekennzeichnet, dass** Daten zu einer vorgebbaren Umgebung einer Fahrtroute in der Navigationsvorrichtung gespeichert werden.

6. Verfahren nach einem der vorhergehenden Ansprüche, **dadurch gekennzeichnet, dass** eine Anweisung zum Einlegen eines Datenträgers ausgegeben wird, wenn von der Navigationsvorrichtung weitere Daten benötigt werden.

7. Verfahren nach einem der vorhergehenden Ansprüche, **dadurch gekennzeichnet, dass** ein Datenformat der Navigationsdaten bei der Übertragung in ein für die Navigationsvorrichtung kompatibles Datenformat geändert wird.

8. Verfahren nach einem der vorherigen Ansprüche, **dadurch gekennzeichnet, dass** angezeigt wird, welche Zeit jeweils noch bis zu einem Anschluss der Übertragung der Navigationsdaten in den Speicher der Navigationsvorrichlung benötigt wird.

9. Navigationsvörrichtung zur Durchführung des Verfahrens nach einem der vorhergehenden Ansprüche.

## Claims

1. Method for navigation of a vehicle in a road network, with navigation data being read from a data storage medium and being processed in a navigation apparatus, with navigation data being automatically transferred to a memory for the navigation apparatus after insertion of the data storage medium, **characterized in that**, after the automatic transfer, a first data storage medium is replaced by a second data storage medium, **in that**, after insertion of the second data storage medium, navigation data is automatically transferred from the second data storage medium to the memory for the navigation apparatus, **in that** the data which has been transferred from the first and the second data storage medium is still stored in the memory for the navigation apparatus, with a first map region being stored on the first data storage medium and a second map region being stored on the second data storage medium, and **in that** the navigation apparatus calculates a route through the first and the second map region using the map data transferred to the memory.

2. Method according to Claim 1, **characterized in that** the data storage medium is inserted in a data storage medium drive which is connected to the navigation apparatus.

3. Method according to one of the preceding claims, **characterized in that** the data is stored in a non-volatile form in the navigation apparatus.

4. Method according to one of the preceding claims, **characterized in that** the data is stored in the memory as a function of a selected function of the navigation apparatus, and/or as a function of a user profile, and/or as a function of a current vehicle position, and/or as a function of a calculated route.

5. Method according to Claim 4, **characterized in that** data is stored relating to a predeterminable area around a route in the navigation apparatus.

6. Method according to one of the preceding claims, **characterized in that** an instruction to insert a data storage medium is emitted when the navigation apparatus requires further data.

7. Method according to one of the preceding claims, **characterized in that** a data format of the navigation data for the transfer is changed to a data format which is compatible with the navigation apparatus.

8. Method according to one of the preceding claims, **characterized in that** an indication is provided of the time which is in each case still required for completion of the transfer of the navigation data to the memory for the navigation apparatus.

9. Navigation apparatus for carrying out the method according to one of the preceding claims.

## Revendications

1. Procédé de navigation d'un véhicule dans un réseau de routes, les données de navigation étant lues par un support de données et étant traitées dans un dispositif de navigation, sachant qu'après insertion du support de données, les données de navigation sont automatiquement transmises dans une mémoire du dispositif de navigation, **caractérisé en ce qu'**après la transmission automatique, un premier support de données est remplacé par un deuxième support de données, qu'après l'insertion du deuxième support de données, les données de navigation sont transmises automatiquement du deuxième support de données dans la mémoire du dispositif de navigation, que les données transmises du premier et du deuxième support de données sont en outre mémorisées dans la mémoire du dispositif de navigation, une première zone cartographique étant mémorisée sur le premier support de données et une deuxième zone cartographique étant mémorisée sur le deuxième support de données et qu'une route à parcourir à travers la première et la deuxième zone cartographique est calculée par le dispositif de navigation à l'aide des données cartographiques transmises à la mémoire.

2. Procédé selon la revendication 1, **caractérisé en ce que** le support de données est inséré dans un lecteur de support de données relié au dispositif de navigation.

3. Procédé selon l'une quelconque des revendications précédentes, **caractérisé en ce que** les données sont enregistrées de façon non volatile dans le dispositif de navigation.

4. Procédé selon l'une quelconque des revendications précédentes, **caractérisé en ce que** les données sont enregistrées dans la mémoire en fonction d'une fonction choisie du dispositif de navigation et/ou en fonction d'un profil d'utilisateur et/ou en fonction d'une position actuelle du véhicule et/ou en fonction d'une route à parcourir calculée.

5. Procédé selon la revendication 4, **caractérisé en ce que** les données correspondant à un environnement donné d'une route à parcourir sont mémorisées dans le dispositif de navigation.

6. Procédé selon l'une quelconque des revendications précédentes, **caractérisé en ce qu'**une indication demandant d'insérer un support de données est envoyée lorsque le dispositif de navigation a besoin d'autres données.

7. Procédé selon l'une quelconque des revendications précédentes, **caractérisé en ce qu'**un format de données des données de navigation est transformé lors de la transmission en un format de données compatible avec le dispositif de navigation.

8. Procédé selon l'une quelconque des revendications précédentes, **caractérisé par** un affichage indiquant le temps respectivement nécessaire pour finir la transmission des données de navigation dans la mémoire du dispositif de navigation.

9. Dispositif de navigation pour mettre en oeuvre le procédé selon l'une quelconque des revendications précédentes.
